(19) Europäisches Patentamt
European Patent Office
Office européen des brevets

(11) EP 1 201 699 B1

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(51) Int Cl.[7]: **C08G 77/388**, C07F 7/08

(21) Anmeldenummer: **01118780.4**

(22) Anmeldetag: **09.08.2001**

(54) **Herstellung von aminofunktionellen Siloxanen**

Process for preparing aminofunctional siloxanes

Procédé de préparation de siloxanes à fonction amino

(84) Benannte Vertragsstaaten:
**DE FR GB IT NL**

(30) Priorität: **19.10.2000 DE 10051886**

(43) Veröffentlichungstag der Anmeldung:
**02.05.2002 Patentblatt 2002/18**

(73) Patentinhaber: **Consortium für elektrochemische Industrie GmbH
81379 München (DE)**

(72) Erfinder:
- **Schäfer, Oliver Dr.
81377 München (DE)**
- **Frey, Volker Dr.
84489 Burghausen (DE)**
- **Pachaly, Bernd Dr.
84561 Mehring-Öd (DE)**
- **Bauer, Andreas Dr.
81371 München (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
**DE-A- 3 546 376** **US-A- 3 146 250**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von aminofunktionellen Siloxanen unter Einsatz von cyclischen Silazanen.

Aminoalkylpolysiloxane und Aminoalkylsiliconharze sind in vielen Anwendungsbereichen brauchbar, einschließlich der Herstellung von Polyimiden und Polyetherimiden. Die kommerzielle Verwendung dieser Verbindungen in größerem Maßstab wird jedoch durch ein relativ teures Herstellungsverfahren verhindert.

Bekannt ist die basenkatalysierte Äquilibrierung von Octamethylcyclotetrasiloxan mit Bisaminopropyltetramethyldisiloxan wie sie z. B. in US-A-5512650 beschrieben wird. Diese Reaktion hat den Nachteil, daß als Edukt das teure Bisaminopropyltetramethyldisiloxan verwendet wird. Hinzu kommen die langen Reaktionszeiten, die bei der Äquilibrierungsreaktion z. T. länger als 10 h sind.

In US-A-3146250 ist ein weiteres, bislang technisch nicht angewendetes Verfahren beschrieben, welches von speziellen cyclischen Silanen der allgemeinen Formel I ausgeht, welche mit HO-Si-Gruppen am Ende einer Siliconkette reagieren können.

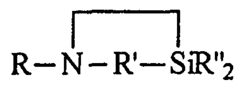

(I)

Dabei ist R' eine Kohlenstoffkette mit mindestens 3 und maximal 6 Kohlenstoffatomen, R" ist ein Kohlenwasserstoffrest, und der Rest R am Stickstoff ist entweder Wasserstoff, ein Kohlenwasserstoffrest oder ein Organosilylrest der allgemeinen Formel (Halogen-$R^1$-)Y2Si-, wobei Y und $R^1$ für Kohlenwasserstoffreste stehen. Ist der Rest R Wasserstoff, so erhält man ein unsubstituiertes cyclisches Silazan, welches zur Funktionalisierung von Hydroxy-terminierten Silanolen eingesetzt werden kann. Der Nachteil dieser unsubstituierten cyclischen Silazane ist jedoch, daß diese nur in sehr schlechten Ausbeuten oder von teuren Edukten ausgehend synthetisiert werden können. Dabei wird in den Synthesen häufig das sehr toxische Allylamin eingesetzt, dessen Gebrauch besonders strengen Sicherheitsbedingungen unterliegt.

Interessanter ist die Synthese von N-substituierten Silazanen, welche sich häufig mit besseren Ausbeuten herstellen lassen. Setzt man jedoch das in US-A-3146250 beschriebene N-Silyl substituierte Silazan ein, so erhält man bei der Reaktion mit hydroxyterminierten Siloxanen unerwünschte Nebenprodukte wie in folgendem Formelschema aufgeführt:

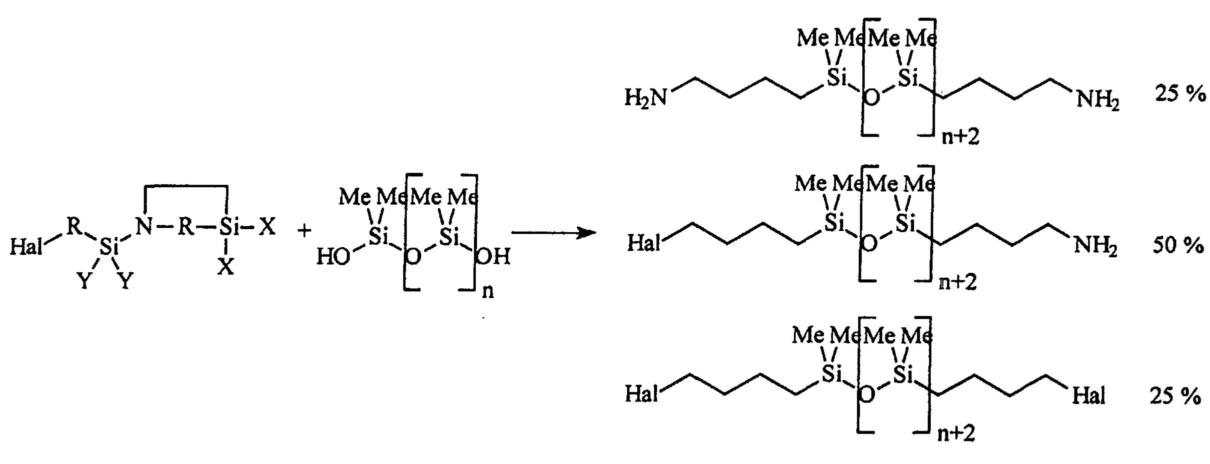


Y und X stehen dabei z. B. für Methyl und R steht für Propyl, Hal steht für Halogen und ist z. B. Chlor. Die jeweiligen Anteile der Produkte ergeben sich aus einfachen Wahrscheinlichkeitsrechnungen.

Setzt man die in DE 3546376 beschriebenen N-substituierten Silazane der allgemeinen Formel II

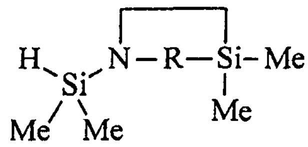

(II)

ein, wobei R z. B für eine Propyl-Gruppe steht, so erhält man ebenfalls nicht gewollte Nebenprodukte in erheblichen Mengen:

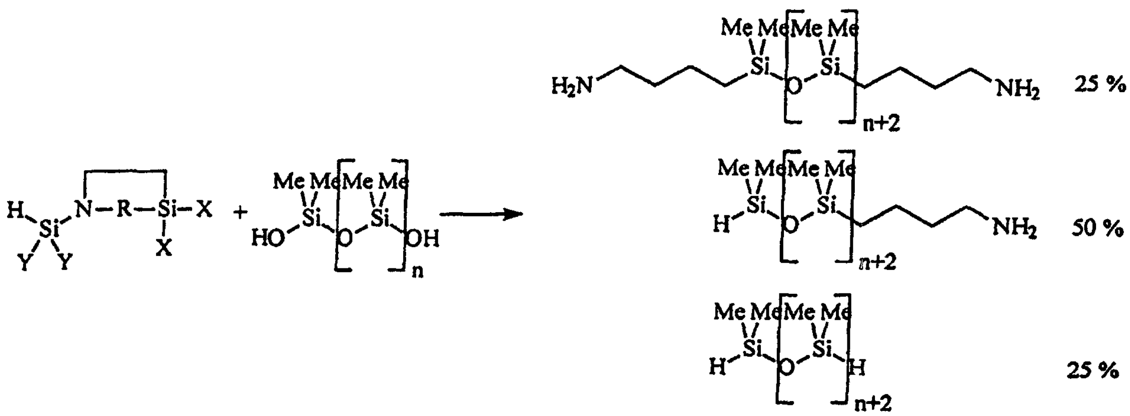


Gegenstand der Erfindung ist ein Verfahren zur Herstellung von aminofunktionellem Organosiloxan der allgemeinen Formel III,

$$(SiO_{4/2})_k(R^1SiO_{3/2})_m(R^1{}_2SiO_{2/2})_p(R^1{}_3SiO_{1/2})_q$$

$$[O_{1/2}SiR^1{}_2\text{-}R\text{-}NH_2]_s[O_{1/2}H]_t \qquad \text{(III)}$$

bei dem Organosiloxan der allgemeinen Formel IV

(IV)

$$(SiO_{4/2})_k(R^1SiO_{3/2})_m(R^1{}_2SiO_{2/2})_p(R^1{}_3SiO_{1/2})_q[O_{1/2}H]_r \qquad \text{(IV)}$$

mit cyclischem Silazan der allgemeinen Formel V

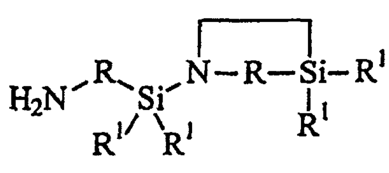

(V)

umgesetzt wird, wobei

**R** einen gegebenenfalls halogensubstituierten unverzweigten $C_3$-$C_6$-Alkylenrest,

| | |
|---|---|
| **$R^x$** | Wasserstoff oder einen gegebenenfalls mit -CN oder Halogen substituierten $C_1$-$C_{10}$-Kohlenwasserstoffrest, |
| **$R^1$** | ein Wasserstoffatom oder einen monovalenten gegebenenfalls mit -CN, -NCO, -N**$R^x$**$_2$, -COOH, -COO**$R^x$**, -Halogen, -Acryl,-Epoxy, -SH, -OH oder -CON**$R^x$**$_2$ substituierten Si-C gebundenen $C_1$-$C_{20}$-Kohlenwasserstoffrest oder $C_1$-$C_{15}$-Kohlenwasserstoffoxyrest in denen jeweils eine oder mehrere, einander nicht benachbarte Methyleneinheiten durch Gruppen -O-, -CO-,-COO-, -OCO-, oder -OCOO-, -S-, oder -N**$R^x$**- ersetzt sein können und in denen eine oder mehrere, einander nicht benachbarte Methineinheiten durch Gruppen, -N=, -N=N-, oder - P= ersetzt sein können, |
| **s** | Werte von mindestens 1, |
| **r** | Werte von mindestens 1, |
| **s + t** | den Wert von r und |
| **k + m + p + q** | Werte von mindestens 2 bedeuten. |

Die eingesetzten cyclischen Siloxane der allgemeinen Formel V können einfach und in hohen Ausbeuten hergestellt werden. Sie reagieren auch ohne die Entstehung von Nebenprodukten mit hydroxyfunktionellen Siloxanen der allgemeinen Formel IV ohne die Verwendung spezieller Katalysatoren.

Im cyclischem Silazan der allgemeinen Formel V kann **R** substituiert sein mit Halogenatomen, insbesondere Fluor und Chlor. Vorzugsweise sind zwischen Silicium-Atom und Stickstoffatom des Ringes 3 Atome angeordnet.

Die $C_1$-$C_{20}$-Kohlenwasserstoffreste und $C_1$-$C_{20}$-Kohlenwasserstoffoxyreste **$R^1$** können aliphatisch gesättigt oder ungesättigt, aromatisch, geradkettig oder verzweigt sein. **$R^1$** weist vorzugsweise 1 bis 12 Atome, insbesondere 1 bis 6 Atome, vorzugsweise nur Kohlenstoffatome oder ein Alkoxysauerstoffatom und sonst nur Kohlenstoffatome auf. Vorzugsweise ist **$R^1$** ein geradkettiger oder verzweigter $C_1$-$C_6$-Alkylrest. Besonders bevorzugt sind die Reste Methyl, Ethyl, Phenyl, Vinyl und Trifluorpropyl.

Bevorzugt werden die Verbindungen der allgemeinen Formel III hergestellt, bei denen **R** einen Propylenrest bedeutet und **$R^1$** Methyl, Ethyl, Phenyl, Vinyl oder Trifluorpropyl bedeutet.

Das aminofunktionelle Organosiloxan der allgemeinen Formel III kann linear, cyclisch oder verzweigt sein. Die Summe von k, m, p, q, s und t ist vorzugsweise eine Zahl von 2 bis 20000, insbesondere 8 bis 1000. Um eine Reaktion zwischen dem Organosiloxan der allgemeinen Formel IV und dem Silazan zu ermöglichen, muß $r > 0$ sein, d.h. das Organosiloxan der allgemeinen Formel IV muss Hydroxy-Gruppen enthalten.

Eine bevorzugte Variante für ein verzweigtes Organosiloxan der allgemeinen Formel III ist Organosilicon-Harz. Dieses kann aus mehreren Einheiten bestehen, wie in der allgemeinen Formel III angedeutet ist, wobei die Molprozente der enthaltenen Einheiten durch die Indizes k, m, p, q, r, s und t bezeichnet werden. Bevorzugt ist ein Wert von 0.1 bis 20 % an Einheiten r, bezogen auf die Summe von k, m, p, q und r. Gleichzeitig muß aber auch $k + m > 0$ sein. Beim Organosiloxanharz der allgemeinen Formel III muß $s > 0$ sein und s + t gleich r sein.

Bevorzugt sind hierbei Harze, bei denen 5 % < k + m < 90 %, bezogen auf die Summe von k, m, p, q, r, s und t ist und vorzugsweise t gleich 0 ist. In einem besonders bevorzugten Fall ist der Rest **R** ein Propylenrest und **$R^1$** ist ein Methylrest.

Will man hier Harze herstellen, welche nur einen definierten Amingehalt haben, so wählt man die stöchiometrischen Verhältnisse zwischen Harz und cyclischem Silazan so, daß der gewünschte Amingehalt erreicht wird. Restliche Si-OH Gruppen können gegebenenfalls im Produkt verbleiben.

Eine weitere bevorzugte Variante für ein aminofunktionelles Organosiloxan der allgemeinen Formel III ist ein lineares Organosiloxan der allgemeinen Formel VI,

$$[H]_u[H_2N\text{-}R\text{-}SiR^1{}_2]_vO(SiR^1{}_2O)_nSiR^1{}_2\text{-}R\text{-}NH_2 \qquad \text{(VI)}$$

das aus Organosiloxan der allgemeinen folgenden Formel VII

$$HO(R^1{}_2SiO)_nR^1{}_2SiOH \qquad \text{(VII)}$$

mit cyclischem Silazan der vorstehenden allgemeinen Formel V hergestellt wird, wobei

| | |
|---|---|
| **u** | die Werte 0 oder 1, |
| **v** | die Werte 1 - u und |
| **n** | eine Zahl von 1 bis 20000 bedeuten. |

Vorzugsweise hat **u** den Wert 0.
**n** weist vorzugsweise Werte von 1 bis 20000, insbesondere 8 bis 2000 auf.
Wenn ein Gemisch von Ausgangsverbindungen der allgemeinen Formel VII eingesetzt wird, bezeichnet der Wert von **n** den Durchschnitt der Polymerisationsgrade der vorhandenen Silanole der allgemeinen Formel VII.

Die so dargestellten linearen Organosiloxane der allgemeinen Formel VI können im wesentlichen durch 3 verschiedene Größen charakterisiert werden:

- Viskosität (bzw. Molekulargewicht)
- Amingehalt
- Grad der Aminofunktionalität der Endgruppen

Von diesen Größen können jedoch bei linearem Organosiloxan der allgemeinen Formel VI nur zwei unabhängig voneinander variiert werden, d. h. bei festgelegter Viskosität und Funktionalität ist der Amingehalt festgelegt. Bei festgelegtem Amingehalt und Viskosität ist die Funktionalität festgelegt und bei festgelegtem Amingehalt und Funktionalität ist die Viskosität festgelegt.

Will man nun lineares Organosiloxan der allgemeinen Formel VI herstellen, bei denen der Grad der Funktionalisierung keine Rolle spielt, d.h daß im Falle der Siliconöle diese keine Funktionalität von 2 aufweisen müssen, sondern nur durch den Gesamt-Amingehalt und ihre Viskosität beschrieben werden, so wird als Siliconkomponente ein geeignetes Organosiloxan der allgemeinen folgenden Formel VII gewählt, welche dem Endprodukt die gewünschte Viskosität verleiht, und zur Funktionalisierung ein cyclisches Silazan der allgemeinen Formel V eingesetzt, und zwar in der Menge, die dem Amingehalt des endgültigen Produktes entsprechen soll.

Die Verbindungen der allgemeinen Formel VI haben weiterhin den Vorteil, daß man sie, wenn **u** > 0 ist, entweder mit sich selbst oder mit Verbindungen der allgemeinen Formel VII kondensieren kann, gegebenenfalls mit Unterstützung eines Katalysators, um ebenfalls Verbindungen der allgemeinen Formel VI herzustellen, welche jedoch ein höheres Molekulargewicht besitzen, d.h der Zahlenwert der Zahl **n** steigt an. In einem besonders bevorzugten Fall steht **n** für eine Zahl von 15 bis 50 vor der Kondensation und 50 bis 2000 nach der Kondensation.

Bei dem Verfahren zur Herstellung von aminofunktionellem Organosiloxan der allgemeinen Formel III ist die Menge der verwendeten Silazane der allgemeinen Formel V abhängig von der Menge der zu funktionalisierenden Silanol-Gruppen. Will man jedoch eine vollständige Funktionalisierung der OH-Gruppen erreichen, so ist das Silazan in mindestens äquimolaren Mengen zuzugeben. Verwendet man das cyclische Silazan im Überschuß, so kann das nicht abreagierte Silazan im Anschluß entweder abdestilliert werden oder hydrolysiert und dann, gegebenenfalls, abgezogen werden.

Bevorzugt wird das Verfahren bei 0°C bis 100°C, besonders bevorzugt bei mindestens 10°C bis mindestens 40 C durchgeführt. Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 Mpa) gearbeitet.

Bei der Verwendung von Lösungsmitteln sind inerte, insbesondere aprotische Lösungsmittel wie aliphatische Kohlenwasserstoffe, wie z. B. Heptan oder Decan und aromatische Kohlenwaserstoffe wie z. B. Toluol oder Xylol bevorzugt. Ebenfalls können Ether wie THF, Diethylether oder MTBE verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa sind bevorzugt.

Falls Silazan der allgemeinen Formel VI zu dem Organosiloxan allgemeinen Formel IV im Unterschuss zugegeben wird, können restliche nicht umgesetzte Si-OH Gruppen im aminofunktionellen Organosiloxan der allgemeinen Formel III verbleiben oder werden mit anderen Silazanen der nachstehenden allgemeinen Formel VIII umgesetzt:

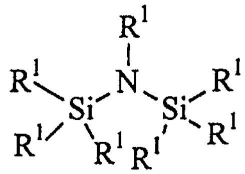

VIII

Man erhält so aminofunktionelles Oganosiloxan der allgemeinen Formel IX

$$(SiO_{4/2})_k(R^1SiO_{3/2})_m(R^1{}_2SiO_{2/2})_p(R^1{}_3SiO_{1/2})_q$$
$$[O_{1/2}SiR^1{}_2\text{-}R\text{-}NH_2]_s[O_{1/2}H]_t(O_{1/2}SiR^1{}_3)_w \qquad (IX)$$

Dabei sind **R, R$^1$, k, m, p, q** und **s** wie oben definiert. **t** ist größer oder gleich 0, **w** ist größer 0 und **s + t + w = r,** wobei **r** in der vorstehenden allgemeinen Formel IV definiert ist.

Silazane der allgemeinen Formel VIII können gleichzeitig mit cyclischem Silazan der allgemeinen Formel V oder nach der Umsetzung des Silazans der allgemeinen Formel V eingesetzt werden.

Aminofunktionelle Organosiloxane der allgemeinen Formel IX, die hergestellt worden sind durch Einsatz von Silazanen der allgemeinen Formel VIII und mit cyclischem Silazan der allgemeinen Formel V können z. B verwendet werden zur Erhöhung der Aminzahl in hochviskosen Aminosiliconen. Man erreicht dadurch, daß man mit diesen Mischungen aus Aminosiliconen und Aminosiliconharzen Mischungen erhält, die eine hohe Aminzahl mit einer hohen Viskosität vereinen. Dies ist eine Kombination, die mit reinen difunktionellen Aminosilikonen so nicht erreicht werden kann.

Werden lineare Organosiloxane der vorstehenden allgemeinen Formel VII mit sowohl Silazanen der allgemeinen Formel V als auch Silazanen der allgemeinen Formel VIII umgesetzt, so erhält man Verbindungen der allgemeinen Formel X

$$[R^1{}_3Si]_u[H_2N\text{-}R\text{-}SiR^1{}_2]_vO(SiR^1{}_2O)_nSiR^1{}_2\text{-}R\text{-}NH_2 \qquad X$$

wobei **R$^1$, R,** und **n** wie oben definiert sind und durchschnittlich **u** > 0, **v** < 1 und **u + v** = 1.

Diese Zweit-terminierung kann aber auch gegebenenfalls unterbleiben, sie bietet jedoch hinsichtlich der Stabilität der Materialien bei erhöhten Temperaturen deutliche Vorteile, da Si-OH-Gruppen bei höheren Temperaturen zur Kondensation neigen und so die Viskosität der erhaltenen Lösungen erhöhen.

Ein Silazan der allgemeinen Formel V kann hergestellt werden durch ein Verfahren bei dem Halogenalkyldialkylchlorsilan der allgemeinen Formel XI

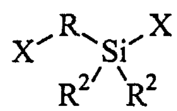

oder Bishalogenalkyltetraalkyldisilazan der allgemeinen Formel XII

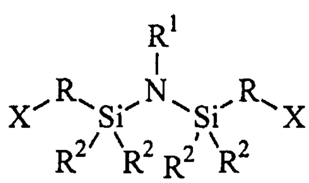

oder ein Gemisch aus Verbindungen der allgemeinen Formeln XI und XII, bei denen

**X** F, Cl, Br, oder I bedeuten,
**R$^2$** die Bedeutungen von R$^1$ hat und
**R$^1$** und **R** die vorstehenden Bedeutungen aufweisen,

mit Ammoniak, vorzugsweise unter Druck umgesetzt wird.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

**Beispiel 1:**

1000 g Me-Siloxan (bishydroxy-terminiertes Polydimethyl-siloxan mit einem mittleren Molekulargewicht von 3000 g/mol) wurden bei Raumtemperatur mit 84,8 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 3 Stunden alle OH-Gruppen zu Aminopropyl-Einheiten umgesetzt waren und noch restliches N-((3-Aminopropyl)-dimethylsilyl)-2,2-dimethyl-1-aza-2-silacyclopentan vorhanden war. Anschließend wurden zur Umsetzung des verbliebenen Silazans noch 2 ml Wasser zu der Reaktionslösung gegeben und kurz im Vakuum (20 mbar) bei 60 °C destilliert.

**Beispiel 2:**

1000 g Me-Siloxan (bishydroxy-terminiertes Polydimethyl-siloxan mit einem mittleren Molekulargewicht von 3000 g/mol) wurden bei Raumtemperatur mit 77,2 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 3:**

100 g Silicon ÖL (bishydroxy-terminiertes Polydimethyl-siloxan mit einem mittleren Molekulargewicht von 13000 g/mol) wurden bei 50 °C mit 1,8 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 4:**

100 g Silicon ÖL (bishydroxy-terminiertes Polydimethyl-siloxan mit einem mittleren Molekulargewicht von 28000 g/mol)wurden bei 50 °C mit 0,85 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 5:**

100 g Silicon ÖL (bishydroxy-terminiertes Polydiphenyl-siloxan mit einem mittleren Molekulargewicht von 1000 g/mol) wurden bei 100 °C mit 23,2 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 2 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 6:**

1000 g Silicon ÖL (bishydroxy-terminiertes Polymethylvinylsiloxan mit einem Vinyl: Methyl -Verhältnis 1 : 4 und einem mittleren Molekulargewicht von 2800 g/mol) wurden bei Raumtemperatur mit 83,4 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 3 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 7:**

1000 g Silicon ÖL (bishydroxy-terminiertes Polymethylvinylsiloxan mit einem Vinyl: Methyl -Verhältnis 1 : 12 und einem mittleren Molekulargewicht von 2600 g/mol wurden bei Raumtemperatur mit 88,9 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 3 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

**Beispiel 8:**

100 g Silicon ÖL (bishydroxy-terminiertes Polymethyltrifluorpropylsiloxan mit einem Trifluorpropyl: Methyl-Verhältnis von 1 : 1 und mit einem mittleren Molekulargewicht von 900 g/mol) wurden bei Raumtemperatur mit 25,8 g N-((3-Aminopropyl)-dimethylsilyl)-2,2-dimethyl-1-aza-2-silacyclopentan umgesetzt. $^{1}$H-NMR und $^{29}$Si-NMR zeigten, daß nach 3 Stunden alle OH-Gruppen zu Aminopropyl-Einheiten umgesetzt waren und kein restliches N-((3-Aminopropyl)-dimethylsilyl)-2,2-dimethyl-1-aza-2-silacyclopentan mehr nachweisbar war.

## Patentansprüche

1. Verfahren zur Herstellung von aminofunktionellem Organosiloxan der allgemeinen Formel III,

$$(SiO_{4/2})_k(R^1SiO_{3/2})_m(R^1{}_2SiO_{2/2})_p(R^1{}_3SiO_{1/2})_q$$
$$[O_{1/2}SiR^1{}_2\text{-}R\text{-}NH_2]_s[O_{1/2}H]_t \quad \text{(III)}$$

bei dem Organosiloxan der allgemeinen Formel IV

$$(SiO_{4/2})_k(R^1SiO_{3/2})_m(R^1{}_2SiO_{2/2})_p(R^1{}_3SiO_{1/2})_q[O_{1/2}H]_r \quad \text{(IV)}$$

mit cyclischem Silazan der allgemeinen Formel V

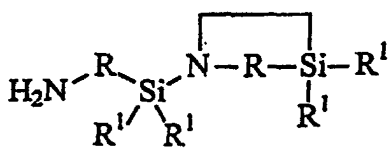

(V)

umgesetzt wird, wobei

| | |
|---|---|
| **R** | einen gegebenenfalls halogensubstituierten unverzweigten $C_3$-$C_6$-Alkylenrest, |
| **$R^x$** | Wasserstoff oder einen, gegebenenfalls mit -CN oder Halogen substituierten $C_1$-$C_{10}$-Kohlenwasserstoffrest, |
| **$R^1$** | ein Wasserstoffatom oder einen monovalenten, gegebenenfalls mit -CN, -NCO, -N**$R^x$**$_2$, -COOH, -COO**$R^x$**, -Halogen, -Acryl,-Epoxy, -SH, -OH oder -CON**$R^x$**$_2$ substituierten Si-C gebundenen $C_1$-$C_{20}$-Kohlenwasserstoffrest oder $C_1$-$C_{15}$-Kohlenwasserstoffoxyrest in denen jeweils eine oder mehrere, einander nicht benachbarte Methyleneinheiten durch Gruppen -O-, -CO-,-COO-, -OCO-, oder -OCOO-, -S-, oder -N**$R^x$**- ersetzt sein können und in denen eine oder mehrere, einander nicht benachbarte Methineinheiten durch Gruppen, -N=, -N=N-, oder - P= ersetzt sein können, |
| **s** | Werte von mindestens 1, |
| **r** | Werte von mindestens 1, |
| **s + t** | den Wert von r und |
| **k + m + p + q** | Werte von mindestens 2 bedeuten. |

2. Verfahren nach Anspruch 1, bei dem **$R^1$** Methyl, Ethyl, Phenyl, Vinyl oder Trifluorpropyl bedeutet.

3. Verfahren nach Anspruch 1 oder 2, bei dem die Summe von **k, m, p, q, s** und **t** eine Zahl von 2 bis 20000 ist.

**4.** Verfahren nach Anspruch 1 bis 3, bei dem Harze hergestellt werden, bei denen 5 % < **k + m** < 90 %, bezogen auf die Summe von **k, m, p, q, r, s** und **t** ist.

**5.** Verfahren nach Anspruch 1 bis 4 bei dem lineares Organosiloxan der allgemeinen Formel VI,

$$[H]_u[H_2N\text{-}R\text{-}SiR^1{}_2]_vO(SiR^1{}_2O)_nSiR^1{}_2\text{-}R\text{-}NH_2 \qquad (VI)$$

aus Organosiloxan der allgemeinen folgenden Formel VII

$$HO(R^1{}_2SiO)_nR^1{}_2SiOH \qquad (VII)$$

mit cyclischem Silazan der vorstehenden allgemeinen Formel V hergestellt wird, wobei

**u** die Werte 0 oder 1,
**v** die Werte 1 - u und
**n** eine Zahl von 1 bis 20000 bedeuten.

**6.** Verfahren nach Anspruch 1 bis 5, wobei das Verfahren bei 0°C bis 100°C durchgeführt wird.

**7.** Verfahren nach Anspruch 1 bis 6, bei dem aminofunktionelles Oganosiloxan der allgemeinen Formel IX

$$(SiO_{4/2})_k(R^1SiO_{3/2})_m(R^1{}_2SiO_{2/2})_p(R^1{}_3SiO_{1/2})_q$$
$$[O_{1/2}SiR^1{}_2\text{-}R\text{-}NH_2]_s[O_{1/2}H]_t(O_{1/2}SiR^1{}_3)_w \qquad (IX)$$

hergestellt wird, indem Silazan der allgemeinen Formel VI zu dem Organosiloxan allgemeinen Formel IV im Unterschuss zugegeben wird, und nicht umgesetzte Si-OH Gruppen im aminofunktionellen Organosiloxan der allgemeinen Formel III mit Silazanen der nachstehenden allgemeinen Formel VIII

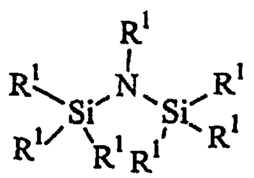

VIII

umgesetzt werden, wobei

| | |
|---|---|
| **R, $R^1$, k, m, p, q** und **s** | wie in Anspruch 1 definiert sind, |
| **t** | größer oder gleich 0 ist, |
| **w** | größer 0 ist und |
| | **s** + **t** + **w** = **r** gilt. |

**8.** Verfahren nach Anspruch 7, bei dem Silazane der allgemeinen Formel VIII nach der Umsetzung des Silazans der allgemeinen Formel V eingesetzt werden.

## Claims

**1.** Process for preparing an amino-functional organosiloxane of the formula III,

$$(SiO_{4/2})_k(R^1SiO_{3/2})_m(R^1{}_2SiO_{2/2})_p(R^1{}_3SiO_{1/2})_q[O_{1/2}SiR^1{}_2\text{-}R\text{-}NH_2]_s[O_{1/2}H]_t \quad (III)$$

which comprises reacting an organosiloxane of the formula IV

$$(SiO_{4/2})_k(R^1SiO_{3/2})_m(R^1{}_2SiO_{2/2})_p(R^1{}_3SiO_{1/2})_q[O_{1/2}H]_r \quad (IV)$$

with a cyclic silazane of the formula V

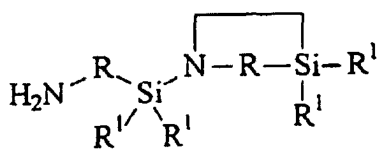

(V)

where

| | |
|---|---|
| R | is an unsubstituted or halogen-substituted unbranched $C_3$-$C_6$-alkylene radical, |
| $R^x$ | is hydrogen or a $C_1$-$C_{10}$-hydrocarbon radical which may be unsubstituted or substituted by -CN or halogen, |
| $R^1$ | is a hydrogen atom or a monovalent Si-C-bonded $C_1$-$C_{20}$-hydrocarbon radical which may be unsubstituted or substituted by -CN, -NCO, $NR^x{}_2$, -COOH, $-COOR^x$, -halogen, -acryl, -epoxy, -SH, -OH or $-CONR^x{}_2$ or is a $C_1$-$C_{15}$-hydrocarbonoxy radical in which one or more nonadjacent methylene units may be replaced by -O-, -CO-, -COO-, -OCO- or -OCOO-, -S- or $-NR^x$-groups and in which one or more nonadjacent methine units may be replaced by -N=, -N=N- or -P= groups, |
| s | is at least 1, |
| r | is at least 1, |
| s + t | is equal to r and |
| k + m + p + q | is at least 2. |

**2.** Process according to Claim 1, wherein $R^1$ is methyl, ethyl, phenyl, vinyl or trifluoropropyl.

**3.** Process according to Claim 1 or 2, wherein the sum of k, m, p, q, s and t is from 2 to 20,000.

**4.** Process according to any of Claims 1 to 3, wherein resins in which 5% < k + m < 90%, based on the sum of k, m, p, q, r, s and t, are prepared.

**5.** Process according to any of Claims 1 to 4, wherein a linear organosiloxane of the formula VI,

$$[H]_u[H_2N\text{-}R\text{-}SiR^1{}_2]_vO(SiR^1{}_2O)_nSiR^1{}_2\text{-}R\text{-}NH_2 \quad (VI)$$

is prepared from an organosiloxane of the formula VII

$$HO(R^1{}_2SiO)_nR^1{}_2SiOH \quad (VII)$$

by reaction with a cyclic silazane of the formula V above, where

u is 0 or 1,
v is 1 - u and
n is from 1 to 20,000.

**6.** Process according to any of Claims 1 to 5 carried out at from 0°C to 100°C.

**7.** Process according to any of Claims 1 to 6, wherein an amino-functional organosiloxane of the formula IX

$$(SiO_{4/2})_k(R^1SiO_{3/2})_m(R^1{}_2SiO_{2/2})_p(R^1{}_3SiO_{1/2})_q$$
$$[O_{1/2}SiR^1{}_2\text{-}NH_2]_s[O_{1/2}H]_t(O_{1/2}SiR^1{}_3)_w \quad (IX)$$

is prepared by adding a deficiency of the silazane of the formula VI to the organosiloxane of the formula IV and reacting unreacted Si-OH groups in the amino-functional organosiloxane of the formula III with silazanes of the formula VIII,

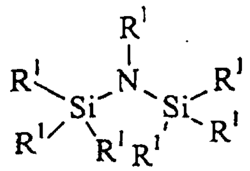

VIII

where

R, $R^1$, k, m, p, q and s are as defined in Claim 1,
t is greater than or equal to 0,
w is greater than 0 and
s + t + w = r.

**8.** Process according to Claim 7, wherein silazanes of the formula VIII are introduced after the reaction of the silazane of the formula V.

**Revendications**

**1.** Procédé pour la préparation d'organosiloxane à fonction amino, de formule générale III

$$(SiO_{4/2})_k(R^1SiO_{3/2})_m(R^1{}_2SiO_{2/2})_p(R^1{}_3SiO_{1/2})_q$$
$$[O_{1/2}SiR^1{}_2\text{-}R\text{-}NH_2]_s[O_{1/2}H]_t \quad (III)$$

dans lequel on fait réagir un organosiloxane de formule générale IV

$$(SiO_{4/2})_k(R^1SiO_{3/2})_m(R^1{}_2SiO_{2/2})_p(R^1{}_3SiO_{1/2})_q$$
$$[O_{1/2}H]_r \quad (IV)$$

avec un silazane cyclique de formule générale V

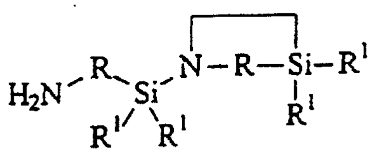

(V)

où

- R représente un radical alkylène en $C_3$-$C_6$ non ramifié, éventuellement substitué par un atome d'halogène,
- $R^x$ représente un atome d'hydrogène ou un radical hydrocarboné en $C_{1-10}$ éventuellement substitué par un groupe -CN ou par un atome d'halogène,
- $R^1$ représente un atome d'hydrogène ou un radical hydrocarboné en $C_{1-20}$ ou un radical hydrocarbyloxy en $C_{1-15}$, monovalents, liés à Si-C, éventuellement substitués par -CN, -NCO, -$NR^x_2$, -COOH, -$COOR^x$, -halogéno, -acryloyle, -époxy, -SH, -OH ou -$CONR^x_2$, dans lesquels un ou plusieurs groupes méthylène non adjacents les uns aux autres peuvent être remplacés par des groupes -O-, -CO-, -COO-, -OCO- ou -OCOO-, -S- ou -$NR^x$- et dans lesquels un ou plusieurs groupes méthine non adjacents les uns aux autres peuvent être remplacés par des groupes -N=, -N=N- ou - P=,
- s a une valeur d'au moins 1,
- r a une valeur d'au moins 1,
- s+ t a la valeur de r et
- k + m + p + q a une valeur d'au moins 2.

**2.** Procédé selon la revendication 1, dans lequel $R^1$ représente le groupe méthyle, éthyle, phényle, vinyle ou trifluoropropyle.

**3.** Procédé selon la revendication 1 ou 2, dans lequel la somme de k, m, p, q, s et t est un nombre allant de 2 à 20 000.

**4.** Procédé selon les revendications 1 à 3, dans lequel on prépare des résines dans lesquelles 5 % < k + m < 90 %, par rapport à la somme de k, m, p, q, r, s et t.

**5.** Procédé selon les revendications 1 à 4, dans lequel on prépare un organosiloxane linéaire de formule générale VI

$$[H]_u[H_2N\text{-}R\text{-}SiR^1{}_2]_vO(SiR^1{}_2O)_nSiR^1{}_2\text{-}R\text{-}NH_2 \quad (VI)$$

à partir d'un organosiloxane de formule générale VII suivante

$$HO(R^1{}_2SiO)_nR^1{}_2SiOH \quad (VII)$$

avec un silazane cyclique de formule générale V précédente, où

- u a la valeur 0 ou 1,
- v a la valeur 1 - u et
- n représente un nombre allant de 1 à 20 000.

**6.** Procédé selon les revendications 1 à 5, dans lequel le procédé est effectué à 0-100°C.

**7.** Procédé selon les revendications 1 à 6, dans lequel on prépare un organosiloxane à fonction amino de formule générale IX

$$(SiO_{4/2})_k(R^1SiO_{3/2})_m(R^1{}_2SiO_{2/2})_p(R^1{}_3SiO_{1/2})_q$$

$$[O_{1/2}SiR^1{}_2\text{-}R\text{-}NH_2]_s[O_{1/2}H]_t(O_{1/2}SiR^1{}_3)_w \quad (IX)$$

en ajoutant en insuffisance un silazane de formule générale VI à l'organosiloxane de formule générale IV, et en faisant réagir les groupes Si-OH n'ayant pas réagi, dans l'organosiloxane à fonction amino de formule générale III, avec des silazanes de formule générale VIII ci-après

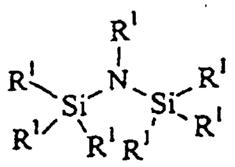

VIII

où

| | |
|---|---|
| R, $R^1$, k, m, p, q et s | sont tels que définis dans la revendication 1, |
| t | est supérieur ou égal à 0, |
| w | est supérieur à 0 et |
| | s + t + w = r. |

**8.** Procédé selon la revendication 7, dans lequel on introduit des silazanes de formule générale VIII après la réaction du silazane de formule générale V.